(19) Europäisches Patentamt
European Patent Office
Office européen des brevets

(11) **EP 4 530 780 A1**

(12) **EUROPÄISCHE PATENTANMELDUNG**

(43) Veröffentlichungstag:
**02.04.2025   Patentblatt 2025/14**

(21) Anmeldenummer: **23200398.8**

(22) Anmeldetag: **28.09.2023**

(51) Internationale Patentklassifikation (IPC):
**G05B 23/02** $^{(2006.01)}$

(52) Gemeinsame Patentklassifikation (CPC):
**G05B 23/024; G05B 23/0243**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Denk, Martin**
**85256 Vierkirchen (DE)**

(74) Vertreter: **Siemens Patent Attorneys**
**Postfach 22 16 34**
**80506 München (DE)**

(54) **ANOMALIEERKENNUNG MITTELS DIGITALEM ZWILLING**

(57)     Anomalien einer realen Vorrichtung (RT) sollen mit Hilfe eines digitalen Zwillings (DT) zuverlässiger erkannt werden. Dazu wird ein Verfahren bereitgestellt, bei dem ein Prozesswert (4, 4') der realen Vorrichtung erfasst und ein statisches Konfidenzintervall in Bezug auf den Prozesswert bereitgestellt wird. Außerdem wird ein gelerntes Konfidenzintervall bereitgestellt. Mit Hilfe des digitalen Zwillings wird ein Prozessschätzwert ermittelt und ein dynamisches Konfidenzintervall wird in Abhängigkeit von dem statischen Konfidenzintervall, dem gelernten Konfidenzintervall und dem Prozessschätzwert geschätzt. Nur für den Fall, dass der Prozesswert (4, 4') außerhalb des dynamischen Konfidenzintervalls liegt, wird eine Anomalie festgestellt.

FIG 1

EP 4 530 780 A1

**Beschreibung**

Die vorliegende Erfindung betrifft ein Verfahren zum Erkennen einer Anomalie einer realen Vorrichtung mit Hilfe eines digitalen Zwillings. Darüber hinaus betrifft die vorliegende Erfindung ein System mit einer realen Vorrichtung und einer von der realen Vorrichtung verschiedenen Recheneinrichtung, auf der ein digitaler Zwilling der realen Vorrichtung implementiert ist, und die zum Erkennen einer Anomalie der realen Vorrichtung mit Hilfe des digitalen Zwillings ausgebildet ist.

In technologiebasierten Umgebungen ist es für Unternehmen und Organisationen immer wichtiger, sich vor Cyber-Angriffen und Systemfehlern zu schützen. Eine der besten Möglichkeiten, dies zu tun, ist die Verwendung von digitalen Zwillingen, um Anomalien in Bezug auf Cyber Security und Wartung zu erkennen. Ein digitaler Zwilling ist eine Technologie, die es Unternehmen ermöglicht, ein virtuelles Abbild ihrer physischen Umgebung zu erstellen, indem sie alle wichtigen Daten sammeln und analysieren. Diese Technologie kann helfen, die Risiken zu minimieren, indem sie potentielle Probleme erkennt und behebt, bevor sie zu einem größeren Problem werden. Ebenso kann dieser Zwilling betriebsbegleitend für die Diagnose eingesetzt werden.

Die Erkennung von Anomalien ist wichtig, um potentielle Sicherheitsrisiken zu identifizieren und zu verhindern. Durch die Erkennung von Anomalien können Unternehmen frühzeitig auf mögliche Sicherheitsprobleme reagieren und entsprechende Maßnahmen ergreifen, um sie zu beheben. Darüber hinaus können Anomalien auch als Indikatoren für andere Probleme dienen, die eine weitere Untersuchung erfordern.

Die Unterscheidung zwischen regelmäßig auftretenden Anomalien und einmalig auftretenden Anomalien ist ein wichtiger Bestandteil der Systemüberwachung. In dem vorliegenden Dokument erfolgt eine Konzentration auf Anomalien, die regelmäßig im Lebenszyklus von Maschinen auftreten, sowie auf Anomalien, die einmalig in der Cyber Security auftreten. Prinzipiell müssen diese Verfahren der Anomalie-Erkennung robust sein gegenüber:

1. Fehlalarmierung: Ein Fehlalarm tritt auf, wenn das System ein Ereignis der Anomalie erkennt, das in Wirklichkeit keine ist.

2. Nicht-Erkennung: Ein Nicht-Erkennungsfehler tritt auf, wenn das System eine tatsächliche Anomalie nicht erkennt.

3. Falsche Klassifizierung: Ein Falschklassifizierungsfehler tritt auf, wenn das System eine Anomalie in die falsche Kategorie einordnet.

4. Unzuverlässigkeit: Ein System kann unzuverlässig sein, wenn es nicht konsistente Ergebnisse liefert oder wenn es nicht in der Lage ist, Anomalien in einem angemessenen Zeitrahmen zu erkennen.

5. Unscharfe Grenzen: Es kann schwierig sein, klare Grenzen zwischen normalen und anormalen Ereignissen zu definieren.

Bekannte regelbasierte Verfahren zur Anomalieerkennung basieren auf der Definition von Regeln, die bestimmte Anomalien erkennen. Diese Regeln können auf verschiedene Arten definiert werden, z. B. auf Basis von statistischen Schwellenwerten, von Mustern oder von anderen heuristischen Verfahren. Die Regeln werden dann auf die Daten angewendet, um Anomalien zu erkennen. Wenn eine Anomalie erkannt wird, wird ein Alarm ausgelöst, um den Benutzer darüber zu informieren. Diese Art der Anomalieerkennung kann sehr effektiv sein, wenn die Regeln richtig definiert sind.

Statistische Verfahren zur Anomalieerkennung basieren auf der Idee, dass einzelne Messwerte oder Gruppen von Messwerten aus einer Datenmenge, die als normal angesehen werden, von denen abweichen, die als anomal angesehen werden. Um eine Anomalie zu erkennen, werden verschiedene statistische Verfahren verwendet, die darauf abzielen, die Wahrscheinlichkeit eines bestimmten Wertes oder einer Gruppe von Werten zu bestimmen, die als anomal angesehen werden.

Maschinelles Lernen ist eine Technik, die es ermöglicht, aus großen Datenmengen zu lernen und vorherzusagen. Diese Technik kann auch verwendet werden, um Anomalien in Daten zu erkennen. Der erste Schritt bei der Anomalie-Erkennung über maschinelles Lernen besteht darin, ein Modell zu erstellen, das die Daten repräsentiert. Dieses Modell kann entweder auf statistischen Methoden oder auf maschinellem Lernen basieren. Nachdem das Modell erstellt wurde, kann es verwendet werden, um Anomalien in den Daten zu erkennen. Dazu werden die Daten mit dem Modell verglichen, um zu sehen, ob sie mit dem Modell übereinstimmen. Wenn die Daten nicht mit dem Modell übereinstimmen, werden sie als Anomalie erkannt.

Es gibt verschiedene Methoden, die zur Erkennung von Anomalien verwendet werden können, einschließlich Klassifikation, Clustering und Regression. Diese Methoden können verwendet werden, um Anomalien in Daten zu erkennen, die durch maschinelles Lernen erstellt wurden. Der heutige Stand der Technik basiert in der Regel auf datenbasierten Ansätzen. Dabei werden Kennwerte einer Anlage oder ein Zustand über die Laufzeit im Betrieb aufgezeichnet. Das Modell wird anhand dieser Daten trainiert, sodass sämtliche Zustände, die von den aufgezeichneten Daten abweichen, als Anomalie festgestellt werden. Häufig ist es jedoch nicht möglich sämtliche Zustände datenbasiert zu erfassen, da die Systeme aufgrund ihrer Komplexität kombinatorisch zu einer zu großen Grundgesamtheit führen.

Die Aufgabe der vorliegenden Erfindung besteht darin, Anomalien insbesondere bei komplexen Systemen sicherer erkennen zu können.

Erfindungsgemäß wird diese Aufgabe gelöst durch ein Verfahren und ein System gemäß den unabhängigen Patentansprüchen. Vorteilhafte Weiterbildungen der Erfindung ergeben sich aus den Unteransprüchen.

Entsprechend der vorliegenden Erfindung wird demnach ein Verfahren zum Erkennen einer Anomalie einer realen Vorrichtung mit Hilfe eines digitalen Zwillings bereitgestellt. Bei der realen Vorrichtung handelt es sich beispielsweise um eine Anlage oder eine beliebige andere technische Vorrichtung, z. B. eine Produktionseinrichtung, eine Verarbeitungseinrichtung und vieles andere mehr. Die reale Vorrichtung stellt einen realen Zwilling zu einem digitalen Zwilling dar, welcher die reale Vorrichtung digital nachbildet. Ein Zusammenspiel von digitalem Zwilling und realem Zwilling ermöglicht die Erkennung von Anomalien.

In einem Verfahrensschritt erfolgt ein Erfassen eines Prozesswerts der realen Vorrichtung. Grundsätzlich können natürlich auch mehrere Prozesswerte der realen Vorrichtung erfasst werden. Bei einem Prozesswert handelt es sich beispielsweise um einen Sensorwert oder Aktorwert bzw. einen beliebigen anderen Zustands- oder Signalwert. Dieser Prozesswert ergibt sich im aktuellen Zustand der realen Vorrichtung. Bei dem Prozesswert kann es sich aber auch um einen Prozesswertverlauf über der Zeit handeln.

In einem weiteren Schritt des Verfahrens erfolgt ein Bereitstellen eines statischen Konfidenzintervalls in Bezug auf den Prozesswert. Beispielsweise wird in einem Ruhezustand der realen Vorrichtung ein Sensorsignal als Prozesswert registriert, das einem gewissen Rauschen unterworfen ist. Anhand des Sensorrauschens kann ein statisches Konfidenzintervall definiert werden, in welchem das Sensorsignal mit hoher Wahrscheinlichkeit liegt. Für die Bestimmung des Konfidenzintervalls kann dem verrauschten Sensorsignal eine bestimmte Verteilung zu Grunde gelegt werden.

Da der Prozesswert in der Regel nicht nur reinem Rauschen unterworfen ist, sondern auch einer gewollten Dynamik, soll auch das Konfidenzintervall dynamisch aktualisiert werden. Diese Aktualisierung erfolgt mit Hilfe des digitalen Zwillings. Hierzu wird mit Hilfe des digitalen Zwillings Prozessschätzwert bzw. ein Ergebnisraum ermittelt. Mit dem digitalen Zwilling werden dabei Prozesswerte simuliert, die zu einen gewissen Ergebnisraum führen. Der Ergebnisraum beinhaltet also beispielsweise simulierte Prozessschätzwerte in einem bestimmten Zeitabschnitt.

Des Weiteren erfolgt ein Bereitstellen eines gelernten Konfidenzintervalls. Ein solches Konfidenzintervall kann in einer Lernphase gelernt werden, vorzugsweise bei sicheren Betriebszuständen. Der Erstellung des gelernten Konfidenzintervalls liegt in der Regel die Erfassung von Abweichungen zwischen realer Vorrichtung und digitalem Zwilling zu Grunde.

In einem weiteren Schritt des Verfahrens erfolgt ein Schätzen eines dynamischen Konfidenzintervalls in Abhängigkeit von dem statischen Konfidenzintervall, dem gelernten Konfidenzintervall und dem Ergebnisraum. Beispielsweise ergibt sich so an einem ersten Arbeitspunkt der realen Vorrichtung ein erstes Konfidenzintervall und an einem zweiten Arbeitspunkt der realen Vorrichtung ein von dem ersten verschiedenes zweites Konfidenzintervall. Die unterschiedlichen Arbeitspunkte führen nämlich bei der Simulation zu unterschiedlichen Prozessschätzwerten (Ergebnisraum) und diese unterschiedlichen Prozessschätzwerte bedingen unterschiedliche Konfidenzintervalle auf der Basis der gelernten Konfidenzintervalle. Das Konfidenzintervall ist somit abhängig vom geschätzten Zustands- oder Messwert. Beispielsweise ist bei einer Waage, die einen Messwert von 80 Kilogramm liefert, eine Abweichung von 1 Kilogramm relativ gering. Dagegen ist die gleiche Abweichung von 1 Kilogramm bei einem Messwert von 2 Kilogramm relativ ungenau. Da die Varianz bei dem Erwartungswert 2 Kilogramm also sehr groß ist, muss also auch das Konfidenzintervall relativ groß sein im Verhältnis zu dem Konfidenzintervall des Messwerts von 80 Kilogramm. In vorteilhafter Weise steht damit ein dynamisches Konfidenzintervall zur Verfügung, das seine Dynamik durch den Abgleich der Prozesswerte des digitalen Zwillings mit der realen Anlage erhält.

Schließlich erfolgt bei dem erfindungsgemäßen Verfahren ein Feststellen der Anomalie nur für den Fall, dass der (reale) Prozesswert außerhalb des dynamischen Konfidenzintervalls liegt. Andernfalls, wenn der Prozesswert innerhalb des dynamischen Konfidenzintervalls liegt, wird keine Anomalie festgestellt. In vorteilhafter Weise ist es damit möglich, mit Hilfe des digitalen Zwillings das Konfidenzintervall dynamisch zu gestalten, um damit sicherer eine Anomalie detektieren zu können.

In einem Ausführungsbeispiel ist vorgesehen, dass eine dem dynamischen Konfidenzintervall zu Grunde liegende Posteriori-Wahrscheinlichkeit $p(\theta|x)$ angelehnt an folgender mathematischer Grundlage berechnet wird:

$$p(\theta|x) = \frac{p(x|\theta)p(\theta)}{\int p(x|\theta)p(\theta)d\theta}$$

wobei $p(x|\theta)$ eine Datenverteilung (Likelihood), $p(\theta)$ eine dem statischen Konfidenzintervall zu Grunde liegende Priori-Wahrscheinlichkeit, x einen Datenwert und $\theta$ einen Modellparameter (des digitalen Zwilling) darstellt. Es wird also die Bayessche Statistik verwendet, um das Konfidenzintervall dynamisch an den jeweiligen Modellparameter anzupassen.

Bei einem weiteren Ausführungsbeispiel wird das statische Konfidenzintervall für genau einen Arbeitspunkt der realen Vorrichtung gewonnen. Es handelt sich also um einen stationären Betrieb der realen Vorrichtung bei dem einen Arbeitspunkt. Dieser eine Arbeitspunkt sollte einen sicheren beziehungsweise bestimmungsgemäßen Betrieb der realen Vorrichtung kennzeichnen. In diesem einen Arbeitspunkt kann also das statische Konfidenzintervall als erste priori Schätzung gelernt werden (Lernphase). Dieses statische Konfidenzintervall kann anschließend dazu benutzt werden, ein dynamisches Konfidenzintervall über eine dynamische Datenverteilung zu bestimmen.

Bei einem anderen Ausführungsbeispiel ist vorgesehen, dass das statische Konfidenzintervall eines von mehreren statischen Konfidenzintervallen ist, die jeweils für ein Segment eines Verlaufs des Prozesswerts und einen dem Segment zugehörigen Mittelwert ermittelt werden, wobei die statischen Konfidenzintervalle in Abhängigkeit von ihren Mittelwerten dazu verwendet werden, das dynamische Konfidenzintervall zu schätzen. Wird beispielsweise in einer Lernphase festgestellt, dass ein Sensorwert in unterschiedlichen Abschnitten verschiedene Schwankungen aufweist, so kann der Verlauf des Sensorwerts in mehrere Segmente unterteilt werden. Jedem Segment kann dann ein eigenes statisches Konfidenzintervall zugeordnet werden. Diese segmentweise statischen Konfidenzintervalle können wiederum dazu genutzt werden, ein dynamisches Konfidenzintervall über den Abgleich der Datenverteilung bestehend aus dem Vergleich der Prozesswerte des digitalen Zwillings mit der Anlage zu generieren, das dynamisch beispielsweise anhand der Mittelwerte der Segmente referenziert wird.

Bei einem anderen Ausführungsbeispiel wird das gelernte Konfidenzintervall in einer Lernphase gelernt, in der Abweichungen jeweiliger Prozesswerte der realen Vorrichtung von denen des digitalen Zwillings in vorgegebenen Betriebszuständen erfasst und daraus das gelernte Konfidenzintervall ermittelt wird. Vorgegebene Betriebszustände sind z.B. sichere Betriebszustände in denen sich das System oder die Anlage in einem bestimmungsgemäßen Betrieb befindet. Die Abweichungen zwischen realen Prozesswerten und simulierten Prozesswerten (Prozessschätzwerte) resultieren beispielsweise aus Bauteiltoleranzen, Temperaturschwankungen oder dergleichen. In der Lernphase werden üblicherweise für viele Betriebszustände entsprechend viele Konfidenzintervalle gelernt, wodurch sich letztlich ein dynamisches gelerntes Konfidenzintervall ergibt.

In einem weiteren Ausführungsbeispiel kann vorgesehen sein, dass der Prozesswert ein Sensorwert, ein Zustandswert oder ein Steuersignalwert der realen Vorrichtung ist. Insbesondere kann es sich bei dem Prozesswert um eine Amplitude eines Signals oder um den Zeitpunkt eines Signals (z. B. Zeitpunkt eines Binärübergangs) handeln. So werden bei z.B. Binär-Signalen die Konfidenzbänder auf das zeitliche Reaktionsverhalten bezogen. Der Prozesswert stellt den Wert eines Prozessparameters dar. Im vorliegenden Fall bezieht sich der Prozesswert auf die reale Vorrichtung, da der digitale Zwilling gegebenenfalls mit diesem Prozesswert kalibriert werden soll. Insbesondere kann es sich bei dem Prozesswert um einen Sensorwert, wie etwa einen Messwert eines beliebigen Sensors handeln. Alternativ kann es sich auch um einen Zustandswert handeln, der beispielsweise den Zustand eines Aktors wiedergibt. Beispielsweise gibt der Zustandswert die Stellung eines Linearmotors wieder. In einem anderen Beispiel gibt der Zustandswert die Offen- oder Geschlossenstellung eines Ventils wieder. Ein anderer Zustandswert kann sich auf den Zustand beispielsweise einer speicherprogrammierbaren Schaltung (SPS) beziehen. Ein weiterer alternativer Prozesswert kann ein Steuersignalwert der realen Vorrichtung sein. Beispielsweise kann es sich bei dem Steuersignalwert um ein Eingabe- oder Ausgabe-Signal einer Komponente der realen Vorrichtung handeln.

In einem bevorzugten Ausführungsbeispiel ist vorgesehen, dass der Ergebnisraum des digitalen Zwillings Soll-Zustände der realen Vorrichtung repräsentiert. Es werden also mit dem digitalen Zwilling Soll-Zustände ermittelt, die das System bei bestimmungsgemäßem Betrieb einnehmen kann. In der Regel gibt es bei einem System viele verschiedene Arbeitspunkte, womit sich entsprechend viele Soll-Zustände des Systems einstellen. Der Ergebnisraum stellt damit eine möglichst große Sammlung an Soll-Zuständen der realen Vorrichtung dar. Mit Hilfe dieser Soll-Zustände kann das dynamische Konfidenzintervall über einen Soll-Ist Abgleich in einer Lernphase entsprechend angepasst werden (Die Wörter "Konfidenzintervall" und "Konfidenzband" werden im vorliegenden Dokument synonym verwendet).

Bei einem weiteren Ausführungsbeispiel wird das dynamische Konfidenzintervall nur dann aktualisiert, wenn der Prozesswert innerhalb des dynamischen Konfidenzintervalls liegt. Andernfalls, wenn der Prozesswert außerhalb des dynamischen Konfidenzintervalls liegt, wird dieses nicht aktualisiert. Es wird also nur dann eine Aktualisierung des dynamischen Konfidenzintervalls vorgenommen, wenn keine Anomalie vorliegt. Dies gewährleistet beispielsweise, dass nur sichere Zustände für eine Aktualisierung des dynamischen Konfidenzintervalls verwendet werden.

In einem weiteren Ausführungsbeispiel kann vorgesehen sein, dass der Prozesswert eine relative Größe in Bezug auf einen korrespondierenden Zwillingsprozesswert des digitalen Zwillings ist. Beispielsweise kann es sich bei dem Prozesswert um die Differenz zwischen realem Prozesswert der realen Vorrichtung und Zwillingsprozesswert des digitalen Zwillings handeln. Damit wird als Prozesswert eine Abweichung zwischen realer Vorrichtung und digitalem Zwilling benutzt. Gerade solche Differenzen eignen sich in besonderer Weise, um Anomalien festzustellen.

Bei einem anderen Ausführungsbeispiel wird bei dem Schätzen des dynamischen Konfidenzintervalls ein Arbeitspunkt des digitalen Zwillings ermittelt und beispielsweise eine Standardabweichung oder Quantile für das dynamische Konfidenzintervall entsprechend dynamisch aktualisiert. Bei dem Arbeitspunkt kann es sich insbesondere um einen aktuellen Arbeitspunkt handeln. Dieser kann beispielsweise einen Mittelwert eines Prozessparameters darstellen. Mit dem Mittelwert ändert sich in der Regel auch die Standardabweichung vorzugsweise in bekanntem Maße. Mit der Ermittlung des Arbeitspunkts kann somit das dynamische Konfidenzintervall fortlaufend aktualisiert werden.

In einem Ausführungsbeispiel wird für das Schätzen des dynamischen Konfidenzintervalls beispielsweise eine Gauß-Verteilung, eine Binominal-Verteilung, eine Poisson-Verteilung, eine Weibull-Verteilung oder Quantile verwendet. Prinzipiell können beliebige Verteilungen genutzt werden. Insbesondere können auch vorbestimmte Quantilen wie etwa die 5%-Quantile beziehungsweise die 95%-Quantile Verwendung finden, um das Konfidenzintervall aktuell und damit dynamisch zu bestimmen.

Alternativ zu dem Amplitudenwert kann der Prozesswert in einem Ausführungsbeispiel auch ein Zeitwert eines Steuersignals oder eines Zustandssignals sein. Der Zeitwert ist repräsentiert den jeweiligen Zeitpunkt eines Steuersignals, Sensorwerts etc. Es kann ein zeitlicher Versatz zwischen einem Steuersignal und einem Erfassungssignal, mit dem ein Zustand der realen Vorrichtung wiedergegeben wird, gegeben sein. Beispielsweise kann die Flanke eines binären Steuersignals dazu genutzt werden, ein Ventil zu steuern. Zwischen der Flanke des binären Steuersignals und dem tatsächlichen Schaltvorgang vergeht in der Regel ein gewisser Zeitraum. Dieser Zeitraum ist systembedingt und der tatsächliche Schaltzeitpunkt liegt üblicherweise in einem schmalen Toleranzbereich. Bei einer Systemanomalie kann es jedoch auch zu zeitlichen Änderungen, insbesondere zeitlichen Verzögerungen kommen, so dass auch anhand des zeitlichen Versatzes zwischen Steuersignal und tatsächlicher Aktion beziehungsweise korrespondierendem Erfassungssignal ein unvorhergesehener Zeitraum liegt. Dieser unvorhergesehene Zeitraum wiederum kann durch ein entsprechendes Konfidenzintervall detektiert werden.

In einem speziellen Ausführungsbeispiel betreffend die Überwachung einer zeitlichen Anomalie kann das dynamische Konfidenzintervall in Abhängigkeit von einem Sensorwert, einen Zustandswert oder einem Steuersignalwert des digitalen Zwillings ermittelt werden. Dies bedeutet beispielsweise, dass die zeitliche Standardabweichung von der Amplitude eines Sensorwerts, eines Zustandswerts oder eines Steuersignalwerts abhängen kann. Dies ist beispielsweise dann der Fall, wenn eine elektrische Schaltung Kondensatoren aufweist, die mit einer höheren Ladespannung schneller geladen werden können als mit einer niedrigeren Ladespannung.

Erfindungsgemäß wird die oben genannte Aufgabe auch gelöst durch ein System mit

- einer realen Vorrichtung (z. B. Produktionsanlage, Verarbeitungseinrichtung, Messgerät, Untersuchungsgerät) und
- einer von der realen Vorrichtung verschiedenen Recheneinrichtung, auf der ein digitaler Zwilling der realen Vorrichtung implementiert ist, und die zum Erkennen einer Anomalie der realen Vorrichtung mit Hilfe des digitalen Zwillings ausgebildet ist, wobei
- die reale Vorrichtung eine Erfassungseinrichtung aufweist, die ausgebildet ist zum Erfassen eines Prozesswerts der realen Vorrichtung, und
- die Recheneinrichtung ausgebildet ist zum

  * Bereitstellen eines statischen Konfidenzintervalls,
  * Bereitstellen eines gelernten Konfidenzintervalls,
  * Ermitteln eines Prozessschätzwerts mit Hilfe des digitalen Zwillings,
  * Schätzen eines dynamischen Konfidenzintervalls in Abhängigkeit von dem statischen Konfidenzintervall, dem gelernten Konfidenzintervall und dem Prozessschätzwert und
  * Feststellen der Anomalie für den Fall, dass der Prozesswert außerhalb des dynamischen Konfidenzintervalls liegt.

Die oben im Zusammenhang mit dem erfindungsgemäßen Verfahren erläuterten Vorteile und Weiterbildungsmöglichkeiten gelten sinngemäß auch für das erfindungsgemäße System. Dem entsprechend können die dargestellten Verfahrensmerkmale auch als funktionelle Merkmale entsprechender Einheiten des Systems betrachtet werden.

In einem Ausführungsbeispiel des erfindungsgemäßen Systems weist die reale Vorrichtung einen Sensor, der einen Sensorwert als den Prozesswert liefert, oder mindestens einen Aktor, der einen Zustandswert des Aktors als den Prozesswert liefert, oder mindestens ein Steuerelement, das einen Steuersignalwert als den Prozesswert liefert, auf. Insbesondere kann die reale Vorrichtung aber auch mehrere Sensoren und/oder mehrere Aktoren und/oder mehrere Steuerelemente beziehungsweise Mischungen davon aufweisen.

Das beschriebene System kann als Produktionsanlage, Verarbeitungseinrichtung, Messgerät, Untersuchungsgerät und vieles andere mehr realisiert sein. Im Prinzip kann das System jede Vorrichtung repräsentieren, deren Zustand sich mit mehreren Prozessparametern beschreiben lässt.

Insgesamt kann somit eine Kombination aus datenbasierter und regelbasierter Anomalie-Schätzung zur Verfügung gestellt werden. Grundlage bildet ein regelbasierter digitaler Zwilling, dessen Zustandsschätzung mit Daten des realen Zwillings abgeglichen wird.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die vorliegende Erfindung wird nun anhand der beigefügten Zeichnungen näher erläutert, in denen zeigen:

FIG 1      einen schematischen Ablauf eines Ausführungsbeispiels eines erfindungsgemäßen Verfahrens;

FIG 2      die Signalverläufe eines Sensorsignals eines digitalen und eines realen Zwillings;

FIG 3      die Signalverläufe eines Steuersignals eines realen und digitalen Zwillings;

FIG 4      alternative Signalverläufe eines Sensorsignals eines realen und digitalen Zwillings;

FIG 5      alternative Signalverläufe von Steuersignalen eines realen und digitalen Zwillings;

FIG 6      die Signalverläufe von FIG 2 mit dynamischen Konfidenzintervallen;

FIG 7      die Signalverläufe von FIG 4 mit dynamischen Konfidenzintervallen;

FIG 8      die Signale eines realen und digitalen Zwillings in einer Lernphase; und

FIG 9      die Signale eines realen und digitalen Zwillings in einer Betriebsphase;

FIG 10     zeitliche Konfidenzintervalle sowie ein virtuelles binäres Steuerungssignal und ein binäres Signal aus der Steuerung der realen Anlage.

Die nachfolgend näher geschilderten Ausführungsbeispiele stellen bevorzugte Ausführungsformen der vorliegenden Erfindung dar.

In einem Ausführungsbeispiel basiert die vorliegende Erfindung auf der Bayesschen Statistik.

Die Bayessche Statistik ist eine Form der statistischen Analyse, die sich auf die Verwendung von Wahrscheinlichkeiten konzentriert, um Ergebnisse zu erzielen. Sie wird auch als Bayesianische Inference oder Bayesianische Modellierung bezeichnet. Im Gegensatz zur klassischen Statistik, die auf dem Konzept der Wahrscheinlichkeit basiert, verwendet die Bayessche Statistik Wahrscheinlichkeiten, um Aussagen über die Wahrscheinlichkeit eines bestimmten Ereignisses zu machen. Diese Aussagen basieren auf den vorhandenen Daten und den Annahmen, die der Statistiker über die Daten macht. Diese Annahmen werden als Priors bezeichnet. Die Bayessche Statistik wird häufig in der Forschung und in der Entscheidungsfindung verwendet, um Entscheidungen auf der Grundlage von Daten zu treffen.

Die Bayessche Statistik kann auch verwendet werden, um ein Modell zu erstellen, das Vorhersagen über zukünftige Ereignisse macht. Die folgende Gleichung zeigt den prinzipiellen Zusammenhang aus posterior $p(\theta|x)$, Datenverteilung (likelihood) $p(x|\theta)$ und prior $p(\theta)$ mit

$$p(\theta|x) = \frac{p(x|\theta)p(\theta)}{\int p(x|\theta)p(\theta)d\theta} \rightarrow p(\theta|x) \propto p(\theta)p(x|\theta)$$

wobei $p(\theta|x)$ eine unnormierte Posteriori-Verteilung darstellt. Mit prior bezeichnet man die erste Schätzung des Parameters $\theta$, was häufig über Expertenwissen erfolgen kann. Mit Datenverteilung (data distribution bzw. likelihood) $p(x|\theta)$ bezeichnet man die Wahrscheinlichkeit, mit der eine Messung $x$ über den Wert von $\theta$ bestimmt werden kann. Der posterior ist das Update der Verteilung von $\theta$ durch die neuen Messungen. Für die Konfidenzbänder können so drei Phasen a), b), c) definiert werden:

a) Ermittlung der Konfidenzbänder im Ruhezustand (z. B. ein einziger Arbeitspunkt) für die Priori-Annahme. (Update vor dem Betrieb)

b) Ermittlung dynamischer Konfidenzbänder im Anlagen-Soll-Zustand. (Update im Betrieb)

c) Einsatz der Konfidenzbänder im Betrieb. (Gegebenenfalls Update nach dem Betrieb, falls keine Anomalie aufgetreten ist)

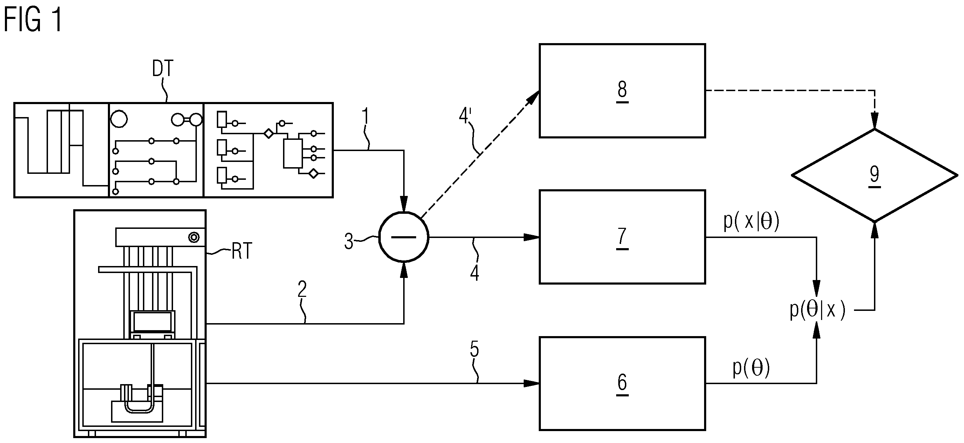

FIG 1 zeigt ein schematisches Ablaufdiagramm eines Ausführungsbeispiels der vorliegenden Erfindung mit den drei Phasen. Insbesondere zeigt die FIG 1 die Update-Strategie der Posteriori-Verteilung über die einzelnen Phasen. Insbesondere zeigt sie den Einfluss der Ermittlung der Priori und der Datenverteilung auf Basis des digitalen Zwillings DT und des realen Zwillings RT.

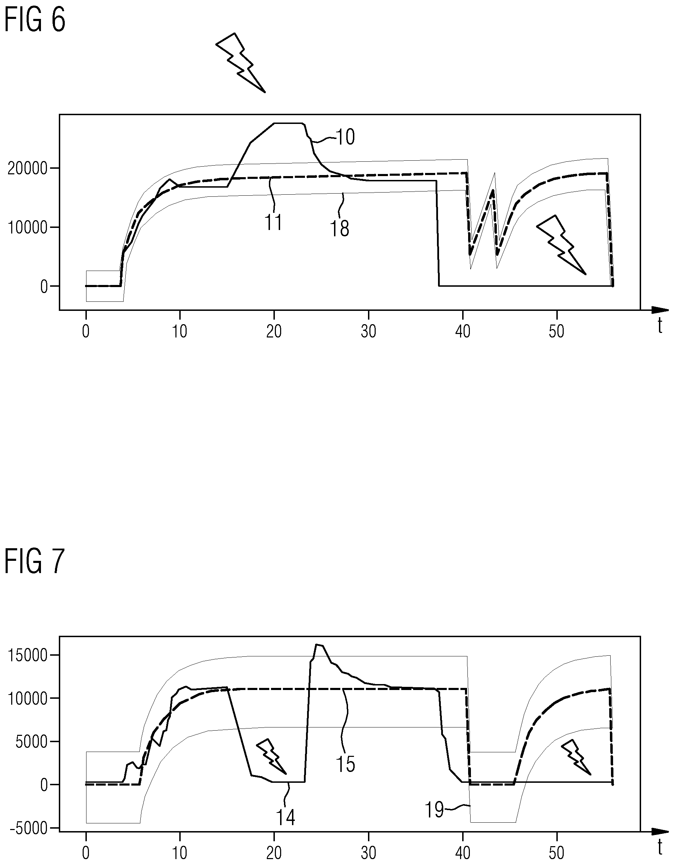

Konkret liefert der digital Zwilling DT im vorliegenden Beispiel einen digitalen Prozessrohwert 1 und der reale Zwilling RT liefert entsprechend einen realen Prozessrohwert 2. Ein Subtrahierer 3 generiert aus beiden Rohwerten 1 und 2 einen entsprechenden Differenzwert als eigentlicher Prozesswert 4. Der Prozesswert 4 stellt also in diesem Fall die Abweichung zwischen dem jeweiligen Wert des digitalen und realen Zwillings dar. Diese Abweichung kann nun für die Erfassung der Dynamischen Konfidenzbänder genutzt werden, da die Prozesswerte des Digitalen Zwillings 1 als Referenz dienen. Dabei ist die wertebasierte Schätzung des dynamischen Intervalls auf den aktuellen Referenzwert auf den Prozesswert 1 des digitalen Zwillings (siehe FIG 6) bezogen.

Der reale Zwilling RT liefert ein (verrauschtes) Ruhesignal 5 in einer Ruhephase 6. In einer solchen Ruhephase 6 befindet sich der reale Zwilling RT beispielsweise an einem vorgegebenen Arbeitspunkt, der nicht verlassen wird. In dieser Ruhephase 6 wird die Priori-Verteilung $p(\theta)$ ermittelt. Aus dieser Priori-Verteilung $p(\theta)$ ergeben sich ein entsprechendes statisches Konfidenzband.

In einer Lernphase 7 wird der reale Zwilling RT in einem Sollbetrieb betrieben. Der Sollbetrieb zeichnet sich dadurch aus, dass sämtliche Komponenten des realen Zwillings bestimmungsgemäß arbeiten. Der Prozesswert 1 in der Lernphase 7 entspricht also einem Soll-Prozesswert. In der Lernphase kann mit den erfassten Daten die Datenverteilung (likelihood) $p(x|\theta)$ für die Konfidenzintervalle gewonnen werden.

Aus der Priori-Verteilung $p(\theta)$ und der Datenverteilung $p(x|\theta)$ kann die Posteriori-Verteilung $p(\theta|x)$ gewonnen werden, aus der entsprechende dynamische Konfidenzbänder bzw.-intervalle abhängig von den Daten hervorgehen.

In einer Anwendungs- beziehungsweise Betriebsphase 8 werden die dynamischen Konfidenzintervalle, die auf der Posteriori-Verteilung $p(\theta|x)$ beruhen, eingesetzt. Dazu wird ein Prozesswert 4' in der Betriebsphase 8 erfasst und bei einer Prüfung 9 mit dem jeweiligen dynamischen Konfidenzintervall verglichen. Falls sich der Prozesswert 4' in der Betriebsphase innerhalb des dynamischen Konfidenzintervalls befindet, liegt keine Anomalie des realen Zwillings RT vor. Andernfalls, wenn der Prozesswert 4' außerhalb des dynamischen Konfidenzintervalls liegt, kann von einer Anomalie des realen Zwillings RT ausgegangen werden.

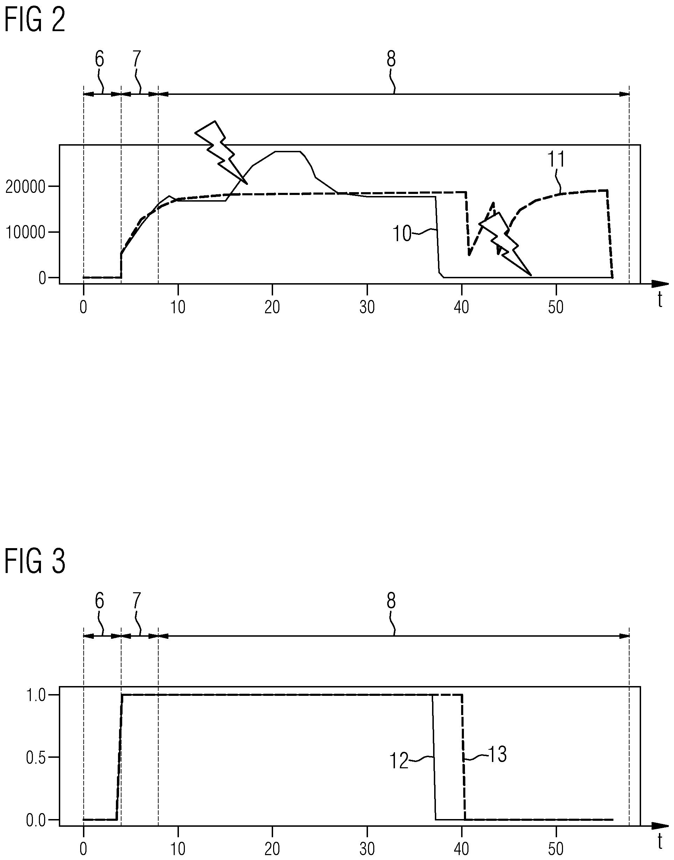

Als konkretes Beispiel sind in den FIG 2 bis 5 für eine Anlage verschiedene Betriebsphasen mit einer Anomalie dargestellt. FIG 2 zeigt den Verlauf eines Aktorwerts 10 eines realen Zwillings und eines Aktorwerts 11 eines digitalen Zwillings. Außerdem sind die Ruhephase 6, die Lernphase 7 und die Betriebsphase 8 dargestellt. In der Ruhephase 6 sind beide Signale beziehungsweise Werte 10 und 11 beispielsweise in einer ruhenden Referenzlage (z. B. 0). In einer anschließenden Lernphase 7, die hier sehr kurz dargestellt ist, sind die Aktorwerte 10 und 11 von realem und digitalem Zwilling sehr ähnlich, da sich der reale Zwilling in einem Soll-Zustand bzw. sicheren Zustand befindet. In der Betriebsphase 8 weicht der Aktorwert 10 des realen Zwillings stellenweise von dem Aktorwert 11 des digitalen Zwillings ab. Diese Abweichungen sind in FIG 2 mit einem Blitz gekennzeichnet und weisen auf eine Anomalie des realen Zwillings RT hin.

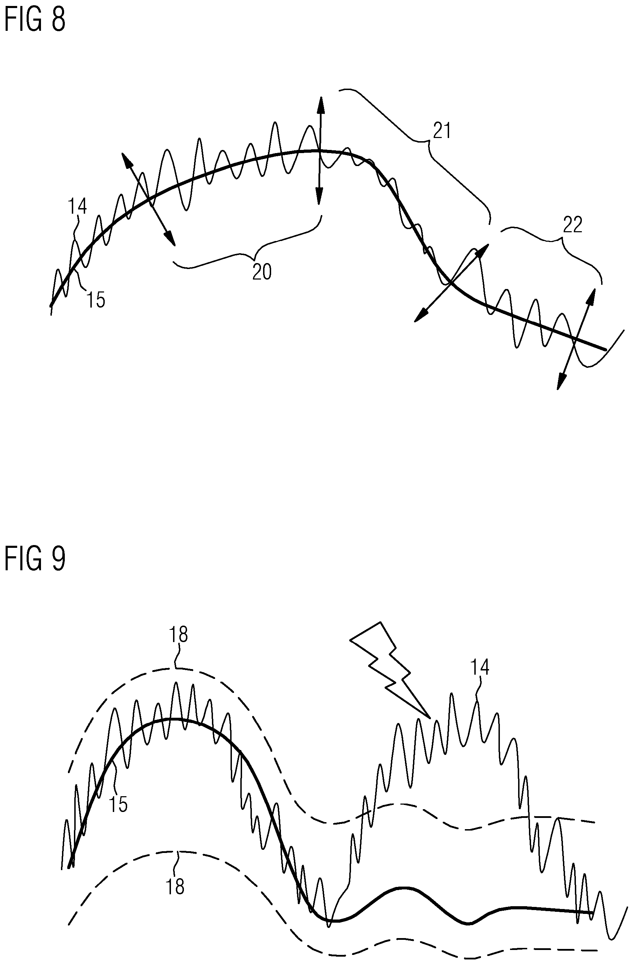

In FIG 3 sind binäre Steuersignale des Aktors von FIG 2 dargestellt. Das Steuersignal 12 stammt von dem realen Zwilling RT und das Steuersignal 13 von dem digitalen Zwilling DT. Die Steuersignale 12 und 13 stimmen im Wesentlichen überein. Beim Zeitwert "40" ergibt sich ein gewisser zeitlicher Versatz beider Signale. Dies kann jedoch im zeitlichen Konfidenzintervall liegen, wie dies im Zusammenhang mit FIG 8 näher erläutert werden wird. Damit wäre im Steuersignal des Aktors keine Anomalie erkennbar.

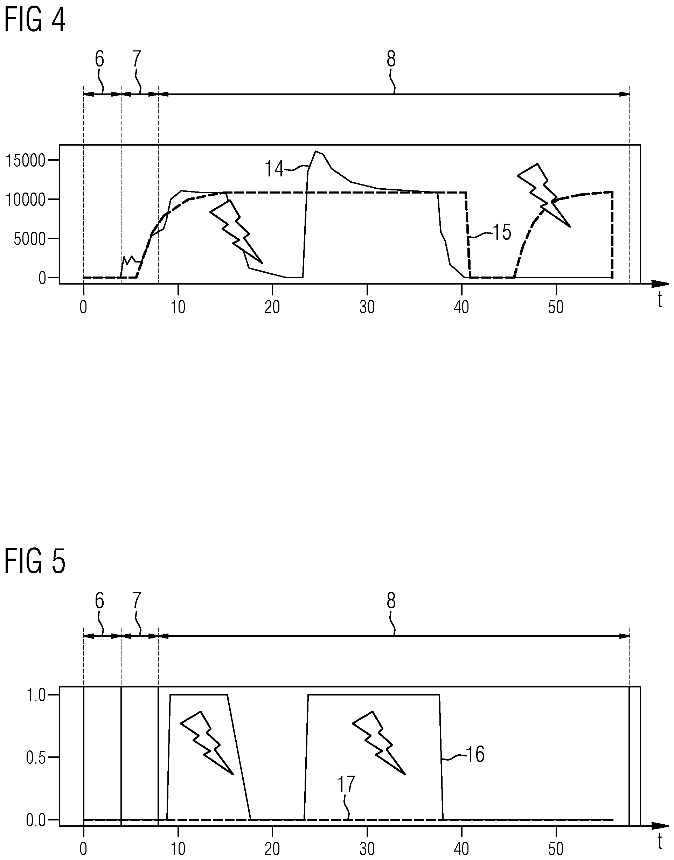

FIG 4 zeigt einen Sensorwert 14 des realen Zwillings RT und einen Sensorwert 15 des digitalen Zwillings DT. Auch hier ergeben sich in der Betriebsphase 8 zum Teil deutliche Abweichungen voneinander, die jeweils auf Anomalien hindeuten (vgl. Blitze).

FIG 5 zeigt ein Steuersignal 16 des realen Zwillings RT und ein Steuersignal 17 des digitalen Zwillings DT. Auch hier ergeben sich in der Betriebsphase 8 wieder zeitweise Abweichungen, die auf Anomalien im Steuerungssystem hinweisen. So liefert beispielsweise der reale Zwilling RT in zwei Zeitabschnitten den binären Wert "1", während das Steuersignal 17 des digitalen Zwillings DT dauerhaft den Binärwert "0" liefert. Ob tatsächlich Anomalien vorliegen, kann jedoch zuverlässig nur mit Hilfe dynamischer Konfidenzintervalle festgestellt werden, wie die FIG 6 und 7 zeigen.

In FIG 6 sind die Aktorwerte 10 und 11 von FIG 2 erneut dargestellt. Zusätzlich ist der Aktorwert 11 des digitalen Zwillings mit einem dynamischen Konfidenzintervall 18 versehen. In ähnlicher Weise sind in FIG 7 die Sensorwerte 14 und 15 des realen Zwillings RT und des digitalen Zwillings DT wie in FIG 4 dargestellt. Der Sensorwert 15 des digitalen Zwillings ist zusätzlich mit einem dynamischen Konfidenzintervall 19 versehen.

Wie die FIG 6 und 7 zeigen, folgt das jeweilige Konfidenzintervall 18, 19 dem Aktorwert 11 beziehungsweise dem Sensorwert 15 des digitalen Zwillings. Das jeweilige Konfidenzintervall 18, 19 wird also durch den digitalen Zwilling dynamisch aktualisiert. Sinkt der jeweilige Simulationswert des digitalen Zwillings, so sinkt auch z. B. der Mittelwert des Konfidenzintervalls. Dabei wird mit dem Simulationswert des digitalen Zwillings auch die Weite des Konfidenzintervalls angepasst.

Auf Basis dieses Konzepts können somit Konfidenzintervalle abhängig vom Digitalen Zwilling geschätzt werden. Diese Konfidenzintervalle sind anschließend notwendig, um Grenzen für Anomalien zu finden. Als prior $p(\theta)$ wird die Anlage zunächst in der Ruhephase bzw. im stationären Betrieb für einen Arbeitspunkt gefahren, nämlich der (a)-Phase (Ruhephase 6 in FIG 1). Dabei werden zunächst die Sensorschwankungen (Rauschen), um den konstanten Mittelwert bestimmt. Da diese Konfidenzbänder jedoch lediglich für einen Arbeitspunkt definiert sind müssen diese stetig upgedatet bzw. aktualisiert werden.

Die Schwierigkeit bei dem Konfidenz-Update besteht nun darin, dass der Mittelwert im "Soll"-Betrieb nicht mehr konstant über den zeitlichen Verlauf ist, sodass eine Standardabweichung nicht ermittelt werden kann. Über den digitalen Zwilling DT kann dem entgegengewirkt werden. Dabei können die simulierten Prozesswerte des digitalen Zwillings als Referenzlage für die Ermittlung der Standardabweichung dienen (b)-Phase (Lernphase 7 in FIG 1). Die priori-Annahme des Arbeitspunkts der (a)-Phase kann dann stetig über die dynamisch ermittelten Quantilen bzw. Standardabweichungen (b)-Phase aktualisiert werden.

Anschließend kann das Modell mit dynamischen Konfidenzintervallen in der Betriebsphase (c)-Phase (Betriebsphase 8 in FIG 1) eingesetzt werden, und ggf. nachträglich im Nicht-FehlerFall angepasst werden. Der digitale Zwilling dient dabei als Sollgeber und die realen Sensordaten werden als Anomalie erkannt, falls diese nicht in dem Konfidenzband um die Werte des digitalen Zwillings liegen.

Für die Konfidenzintervalle können verschiedenste Verteilungen abhängig von der Problemstellung wie Gauß, Binomial, Poisson, Weibull oder ebenso die Quantile (5%, 95%) gewählt werden. Dabei hängen die dynamischen Konfidenzintervalle dann auch vom aktuellen Prozesswert (Simulationswert) selbst ab. Sie können abschnittsweise definiert oder über eine geeignete Verteilung (z. B. Poisson-Verteilung) abgebildet werden.

Die FIG 6 und 7 zeigen die wertebasierten Konfidenzbänder bzw. -intervalle 18 und 19 um die Prozesswerte 11, 15 des digitalen Zwillings und sie zeigen auch die Prozesswerte 10, 14 der realen Anlage. Hierbei zeigt sich, dass eine Anomalie bzw. eine Abweichung z. B. bei dem Zeitpunkt t=20 vom digitalen Zwilling zur realen Anlage erkannt werden kann (vgl. Blitze) .

Ein wichtiger Aspekt dabei ist, dass die Konfidenzintervalle also dynamisch asymmetrisch und nicht fest über die Wertebereiche z. B. der Sensoren und Aktuatoren erfasst werden. Dabei wird ebenfalls das dynamische Verhalten beispielsweise beim Sensor mit abgebildet. So unterscheiden sich die Konfidenzintervalle etwa bei einer Kraftmessdose zwischen 100N und 100KN stark.

Die FIG 8 zeigt Konfidenzintervalle mit verschieden großen Weiten, die segmentweise über verschiedene Mittelwerte definiert werden.

Diese Segmentierung des realen beziehungsweise simulierten Prozesswertverlaufs beispielsweise in das erste Segment 20, das zweite Segment 21 und das dritte Segment 22 kann in der Lernphase 7 erfolgen. FIG 8 zeigt beispielsweise den simulierten Sensorwert 15 des digitalen Zwillings. Darüber hinaus zeigt FIG 8 den Sensorwert 14 des realen Zwillings. Beide Sensorwerte liegen in ihrem wesentlichen Verlauf übereinander. Es ist zu erkennen, dass der reale Sensorwert 14 im ersten Segment 20 und im dritten Segment 22 stärker schwankt als im zweiten Segment 21. Für das Konfidenzintervall bedeutet dies, dass das Konfidenzintervall in dem ersten Segment 20 und in dem dritten Segment 22 größer gewählt werden sollte als im zweiten Segment 21. Gegebenenfalls kann daraus auch eine Regel für Amplitudenwerte beziehungsweise Steigungen gelernt werden.

FIG 9 zeigt eine Anwendung des segmentweise erlernten Konfidenzintervalls in einer Betriebsphase 8. Beispielsweise liefert der digitale Zwilling wieder einen Sensorwert 15. Aufgrund der in der Lernphase 7 gelernten Konfidenzintervalle ergibt sich nun ein Konfidenzintervall 18, das asymmetrisch zu dem simulierten Sensorsignal 15 angeordnet ist. Außerdem ist zu erkennen, dass das Konfidenzintervall 18 bei größeren Werten des simulierten Sensorsignals 15 breiter ist als bei kleineren Werten des simulierten Sensorsignals 15. Die jeweiligen Breiten ergeben sich beispielsweise aus dem segmentweise Lernen.

Ferner ist zu erkennen, dass in FIG 9 der reale Sensorwert 14 abschnittsweise im Konfidenzintervall 18 liegt, aber dann doch im rechten Abschnitt des Bilds das Konfidenzintervall 18 verlässt. In diesem Bereich liegt dann eine entsprechende Anomalie vor (vgl. Blitz).

Neben der Beurteilung der Prozesswerte (z. B. Amplitude), kann ebenso ein zeitliches Verhalten selbst als Anomalie erkannt werden. So können aus unterschiedlichsten Gründen, wie Überlastung vom Server, auf dem das Simulationsmodell läuft oder Temperatureinflüsse z. B. auf Prozessorgeschwindigkeiten Unterschiede in der Reaktionszeit des digitalen Zwillings sowie der realen Anlage auftreten (zeitlicher Versatz). Während oben lediglich sensorwertbasierte Konfidenzintervalle erfasst werden, gilt es ebenso für die zeitliche Reaktion mit demselben Ansatz eine Anomalie zu erkennen sowie in entsprechende Konfidenzintervalle aufzunehmen. Besonders für die Steuerungssignale mit klaren Systemzuständen ist eine zeitliche Betrachtung notwendig.

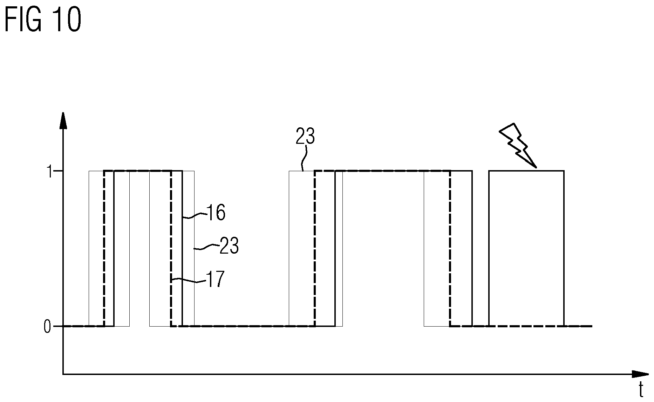

FIG 10 zeigt zeitliche Konfidenzintervalle 23 sowie den Unterschied zwischen einem virtuellen binären Steuerungssignal 17 und dem binären Signal 16 aus der Steuerung der realen Anlage. Das Steuersignal wird beispielsweise zur Steuerung eines Ventils verwendet. Während die ersten beiden realen Ventilzustände bzw. deren Ansteuerungen gegenüber den virtuellen Ventilzuständen bzw. deren Ansteuerungen leicht verzögert sind, ergibt sich eine Anomalie (vgl. Blitz) im rechten Abschnitt des Bilds. Außerhalb der zeitlichen Konfidenzbänder 23 erfolgt nämlich in der realen Anlage eine Ventilansteuerung, obwohl dies beim digitalen Zwilling zumindest zu dem entsprechenden Zeitpunkt nicht vorgesehen ist.

Ein wichtiger Punkt ist dabei, dass diese zeitlichen Konfidenzintervalle 23 der binären Zustände ebenso von physikalischen Prozesswerten abhängig sein können, sodass z. B. eine hohe Raumtemperatur zu einer Vergrößerung der Konfidenzbänder führt (Drosselung des Prozessors aufgrund zu hoher Temperaturen). Die Dynamik der zeitlichen Konfidenzbänder kann somit auch abhängig von anderen Prozesswerten (z. B. Sensor- und Aktorwerte) sein.

Falls diese Schätzung vollautomatisiert erfolgt, besteht in der Modellierung für den Anlagenbetreiber kein Aufwand. Dieser muss lediglich entscheiden, welche Betriebsphasen für die Konfidenzintervalle als valide angesehen werden können.

Wie die obigen Ausführungsbeispiele zeigen, wird der digitale Zwilling zur Erfassung von Konfidenzbänder sowie ebenso zur Erkennung von Anomalien über die Konfidenzbänder genutzt.

Während rein datenbasierte Modelle oftmals in nicht erfassten Systemzuständen zu Fehlern führen können, kann über das Simulationsmodell eine gewisse Dynamik abgebildet werden. Simulationsmodelle ermöglichen es im Gegensatz zu datenbasierten Ansätzen unbekannte Systemzustände zu schätzen.

Ein weiterer Vorteil besteht darin, dass in dieser Erfindung neben den physikalischen Sensor und Aktuator-Werten ebenso Steuersignale mitverarbeitet werden können. Da neben dem physikalischen digitalen Zwilling ebenso ein digitaler Zwilling für die Steuerung vorhanden sein kann, kann die Konfidenzschätzung mehrere Komponenten berücksichtigen, die sich gegebenenfalls gegenseitig beeinflussen (Kreuzkorrelation).

Ein weiterer Vorteil besteht in der Zulassung der Anomalie-Erkennung. So ist es im Flugzeugbereich noch nicht möglich rein datenbasierte Methoden für die Auswertung sowie Auslegung zu verwenden. Diese Erfindung stellt jedoch eine Kombination da, bei der das Simulationsmodell für die Zulassung als Grundlage gewählt werden kann. Da in diesem Ansatz die Konfidenzbänder an das Simulationsmodell gekoppelt sind und die Konfidenzbänder selbst über statistisch parametrische Modelle beschrieben werden (im Gegensatz zu neuronalen Netzen), kann ein eindeutiges deterministische Verhalten sichergestellt werden. Ebenso kann eine Risikoanalyse beispielsweise nach ISO 26262 oder weiteren Normen erfolgen.

**Patentansprüche**

1. Verfahren zum Erkennen einer Anomalie einer realen Vorrichtung (RT) mit Hilfe eines digitalen Zwillings (DT) **gekennzeichnet durch**

    - Erfassen eines Prozesswerts (4, 4') der realen Vorrichtung (RT),
    - Bereitstellen eines statischen Konfidenzintervalls (18, 19) in Bezug auf den Prozesswert (4, 4'),
    - Bereitstellen eines gelernten Konfidenzintervalls,
    - Ermitteln eines Prozessschätzwerts mit Hilfe des digitalen Zwillings (DT),
    - Schätzen eines dynamischen Konfidenzintervalls (18, 19) in Abhängigkeit von dem statischen Konfidenzintervall (18, 19), dem gelernten Konfidenzintervall und dem Prozessschätzwert und
    - Feststellen der Anomalie nur für den Fall, dass der Prozesswert (4, 4') außerhalb des dynamischen Konfidenzintervalls (18, 19) liegt.

2. Verfahren nach Anspruch 1, wobei eine dem dynamischen Konfidenzintervall (18, 19) zu Grunde liegende Posteriori-Wahrscheinlichkeit $p(\theta|x)$ an folgender Formel angelehnt wird:

$$p(\theta|x) = \frac{p(x|\theta)p(\theta)}{\int p(x|\theta)p(\theta)d\theta}$$

wobei $p(x|\theta)$ eine Datenverteilung, $p(\theta)$ eine dem statischen Konfidenzintervall (18, 19) zu Grunde liegende Priori-Wahrscheinlichkeit, $x$ einen Datenwert und $\theta$ einen Modellparameter darstellt.

3. Verfahren nach Anspruch 1 oder 2, wobei das statische Konfidenzintervall (18, 19) für genau einen Arbeitspunkt der realen Vorrichtung (RT) gewonnen wird.

4. Verfahren nach Anspruch 1 oder 2, wobei das statische Konfidenzintervall (18, 19) eines von mehreren statischen Konfidenzintervallen (18, 19) ist, die jeweils für ein Segment (20, 21, 22) eines Verlaufs des Prozesswerts (4, 4') und einem dem Segment (20, 21, 22) zugehörigen Mittelwert ermittelt werden, und wobei die statischen Konfidenzintervalle (18, 19) in Abhängigkeit von ihren Mittelwerten dazu verwendet werden, das dynamische Konfidenzintervall (18, 19) zu schätzen.

5. Verfahren nach einem der vorhergehenden Ansprüche, wobei das gelernte Konfidenzintervall in einer Lernphase (7) gelernt wird, in der Abweichungen jeweiliger Prozesswerte der realen Vorrichtung von denen des digitalen Zwillings in vorgegebenen Betriebszuständen erfasst und daraus das gelernte Konfidenzintervall ermittelt wird.

6. Verfahren nach einem der vorhergehenden Ansprüche, wobei der Prozesswert (4, 4') ein Sensorwert, ein Zustandswert oder ein Steuersignalwert der realen Vorrichtung (RT) ist.

7. Verfahren nach einem der vorhergehenden Ansprüche, wobei der Ergebnisraum des digitalen Zwillings Sollzustände der realen Vorrichtung (RT) repräsentiert.

8. Verfahren nach einem der vorhergehenden Ansprüche, wobei das dynamische Konfidenzintervall (18, 19) aktualisiert wird, nur wenn der Prozesswert (4, 4') innerhalb des dynamischen Konfidenzintervalls (18, 19) liegt.

9. Verfahren nach einem der vorhergehenden Ansprüche, wobei der Prozesswert (4, 4') eine relative Größe in Bezug auf einen korrespondierenden Zwillingsprozesswert des digitalen Zwillings ist.

10. Verfahren nach einem der vorhergehenden Ansprüche, wobei bei dem Schätzen des dynamischen Konfidenzintervalls (18, 19) ein Arbeitspunkt des digitalen Zwillings ermittelt und eine Standardabweichung oder Quantile für das dynamische Konfidenzintervall (18, 19) entsprechend dynamisch aktualisiert wird.

11. Verfahren nach einem der vorhergehenden Ansprüche, wobei für das Schätzen des dynamischen Konfidenzintervalls (18, 19) eine Gauß-Verteilung, eine Binominal-Verteilung, eine Poisson-Verteilung, eine Weibull-Verteilung oder Quantile verwendet wird.

12. Verfahren nach einem der Ansprüche 1 bis 5 und 7 bis 11, wobei der Prozesswert (4, 4') ein Zeitwert eines Steuersignals oder eines Zustandssignals ist.

13. Verfahren nach Anspruch 12, wobei das dynamische Konfidenzintervall (18, 19) in Abhängigkeit von einem Sensorwert (14, 15), Zustandswert (10, 11) oder Steuersignalwert (12, 13, 16, 17) des digitalen Zwillings ermittelt wird.

14. System mit

- einer realen Vorrichtung (RT) und
- einer von der realen Vorrichtung verschiedenen Recheneinrichtung, auf der ein digitaler Zwilling (DT) der realen Vorrichtung implementiert ist, und die zum Erkennen einer Anomalie der realen Vorrichtung (RT) mit Hilfe des digitalen Zwillings (DT) ausgebildet ist,
**dadurch gekennzeichnet, dass**
- die reale Vorrichtung (RT) eine Erfassungseinrichtung aufweist, die ausgebildet ist zum Erfassen eines Prozesswerts (4, 4') der realen Vorrichtung (RT), und
- die Recheneinrichtung ausgebildet ist zum

* Bereitstellen eines statischen Konfidenzintervalls (18, 19),
* Bereitstellen eines gelernten Konfidenzintervalls,
* Ermitteln eines Prozessschätzwerts mit Hilfe des digitalen Zwillings (DT),
* Schätzen eines dynamischen Konfidenzintervalls (18, 19) in Abhängigkeit von dem statischen Konfidenzintervall, dem gelernten Konfidenzintervall und dem Prozessschätzwert und * Feststellen der Anomalie für den Fall, dass der Prozesswert (4, 4') außerhalb des dynamischen Konfidenzintervalls (18, 19) liegt.

15. System nach Anspruch 14, wobei die reale Vorrichtung (RT) mindestens einen Sensor, der einen Sensorwert als den Prozesswert (4, 4') liefert, oder mindestens einen Aktor, der einen Zustandswert des Aktors als den Prozesswert (4, 4') liefert, oder mindestens ein Steuerelement, das einen Steuersignalwert als den Prozesswert (4, 4') liefert, aufweist.

FIG 1

$p(\theta|x)$

$p(x|\theta)$

$p(\theta)$

DT

RT

FIG 2

FIG 3

FIG 4

FIG 5

FIG 6

FIG 7

FIG 8

FIG 9

FIG 10

Europäisches
Patentamt

European
Patent Office

Office européen
des brevets

## EUROPÄISCHER RECHERCHENBERICHT

Nummer der Anmeldung

EP 23 20 0398

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PALMER KYLE A ET AL: "Analysis of transient data in test designs for active fault detection and identification", COMPUTERS & CHEMICAL ENGINEERING, PERGAMON PRESS, OXFORD, GB, Bd. 122, 28. Juni 2018 (2018-06-28), Seiten 93-104, XP085662982, ISSN: 0098-1354, DOI: 10.1016/J.COMPCHEMENG.2018.06.020 * Seite 97 – Seite 102; Abbildungen 2-8; Tabellen 4-5 * ----- | 1-15 | INV. G05B23/02 |
| X | CN 115 408 437 A (CHINA MOBILE COMMUNICATIONS GROUP CO LTD; CHINA MOBILE INF TECH CO LTD) 29. November 2022 (2022-11-29) * Absätze [0072] – [0080], [0170] – [0174]; Abbildungen 4,9,13 * ----- | 1-15 | |
| A | US 2020/230815 A1 (NIKOVSKI DANIEL NIKOLAEV [US] ET AL) 23. Juli 2020 (2020-07-23) * das ganze Dokument * ----- | 1-15 | **RECHERCHIERTE SACHGEBIETE (IPC)** G05B |

Der vorliegende Recherchenbericht wurde für alle Patentansprüche erstellt

| Recherchenort | Abschlußdatum der Recherche | Prüfer |
|---|---|---|
| München | 12. März 2024 | Rakoczy, Tobias |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 0398

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**12-03-2024**

| Im Recherchenbericht angeführtes Patentdokument | Datum der Veröffentlichung | Mitglied(er) der Patentfamilie | Datum der Veröffentlichung |
|---|---|---|---|
| CN 115408437 A | 29-11-2022 | KEINE | |
| US 2020230815 A1 | 23-07-2020 | CN 113272105 A | 17-08-2021 |
| | | EP 3703916 A1 | 09-09-2020 |
| | | JP 7154432 B2 | 17-10-2022 |
| | | JP 2022509557 A | 20-01-2022 |
| | | US 2020230815 A1 | 23-07-2020 |
| | | WO 2020152886 A1 | 30-07-2020 |

Für nähere Einzelheiten zu diesem Anhang : siehe Amtsblatt des Europäischen Patentamts, Nr.12/82